# FASCICULE DE BREVET EUROPEEN

(11) **EP 4 158 313 B1**
(45) Date de publication et mention de la délivrance du brevet: **20.08.2025**
(21) Numéro de dépôt: 21729255.6
(22) Date de dépôt: 24.05.2021
(51) Int. Cl.: G01N 21/3577, G01N 21/35, G01N 21/552

(54) **MÉTHODE PRONOSTIQUE D'HÉMOPATHIES**
PROGNOSEVERFAHREN FÜR BLUTERKRANKUNGEN
PROGNOSIS METHOD FOR BLOOD DISORDERS

(30) Priorité: 25.05.2020 FR 2005494
(43) Date de publication de la demande: 05.04.2023
(73) Titulaire: Centre National de la Recherche Scientifique, 75016 Paris (FR); Centre Hospitalier Régional Universitaire de Tours, 37000 Tours (FR); Université de Tours, 37000 Tours (FR)
(72) Inventeur: HERAULT, Olivier, 37250 La Tremblaye (FR); SIRE, Olivier, 56890 Meucon (FR)
(74) Mandataire: Novagraaf Technologies
(86) Numéro de dépôt international: PCT/EP2021/063762
(87) Numéro de publication internationale: WO 2021/239665

(56) Documents cités:
- US-A1- 2013 137 134
- LE CORVEC MAËNA ET AL: "Mid-infrared spectroscopy of serum, a promising non-invasive method to assess prognosis in patients with ascites and cirrhosis", PLOS ONE, vol. 12, no. 10, 2017, pages 1 - 15, XP055772274, DOI: 10.1371/journal.pone.0185997
- SHENG DAPING ET AL: "Distinction of leukemia patients and healthy persons' serum using FTIR spectroscopy", SPECTROCHIMICA ACTA PART A: MOLECULAR AND BIOMOLECULAR SPECTROSCOPY, 2013, pages 228 - 232, XP055772773, Retrieved from the Internet <URL:https://www.sciencedirect.com/science/article/pii/S1386142512009432?via%3Dihub> [retrieved on 20210205]
- BABRAH JASPREET ET AL: "FT-infrared spectroscopic studies of lymphoma, lymphoid, and myeloid leukemia cell lines", SPIE PROCEEDINGS, vol. 6628, 2007, US, pages 1 - 8, XP055772606, ISBN: 978-1-5106-3673-6, DOI: 10.1117/12.728220

## Description

L'invention concerne une méthode pronostic d'hémopathies.

Le domaine des maladies du sang nécessite généralement un dépistage précoce, un diagnostic et le suivi de l'évolution de la maladie vers un état plus grave, et implique une analyse réalisable sur un échantillon biologique spécifique, qui s'ajoute généralement à de nombreuses prises de sang.

Les syndromes myélodysplasiques (SMB) sont des états pré-leucémiques dont la fréquence augmente avec le vieillissement de la population et qui présentent une évolution progressive avec transformation en leucémie aigüe secondaire dans 30% des cas. Leur diagnostic nécessite un prélèvement de moelle osseuse pour réaliser une analyse cytologique par un biologiste spécialisé en hématologie (myélogramme).

De telles analyses sont invasives, longues et onéreuses, et il est important de pouvoir simplifier les analyses et d'obtenir des résultats plus rapides

La spectroscopie Infrarouge à transformée de Fourier (FTIR) est connue et utilisée pour identifier des composés organiques et examiner la composition biochimique d'un échantillon biologique (tissu ou fluide).

Des procédés tels que la leucémogenèse peuvent induire des changements globaux de la biochimie cellulaire, conduisant à des différences dans les spectres d'absorption lorsqu'ils sont analysés par des techniques de spectroscopie FTIR. Par conséquent, la spectroscopie FTIR est couramment utilisée pour faire la distinction entre un tissu normal et un tissu anormal par analyse des changements dans des bandes d'absorption de macromolécules telles que des lipides, des protéines, des glucides et des acides nucléiques.

On connaît d'ailleurs de l'état de la technique l'enseignement de la demande WO2011121588, où il est décrit un procédé et un système de détection et de surveillance d'un cancer hématologique. Plus particulièrement, les inventeurs désignés dans cette demande ont identifié que les échantillons de cellules mononucléées obtenus à partir de patients leucémiques produisent des spectres FTIR qui diffèrent de ceux des témoins sains et des patients non cancéreux souffrant de symptômes cliniques qui sont similaires à la leucémie, par exemple, des sujets atteints d'une fièvre, permettant ainsi un diagnostic différentiel des patients leucémiques. En distinguant les patients leucémiques, les patients présentant des symptômes cliniques similaires à la leucémie, et des contrôles sains, la spectroscopie IR fournit un outil de diagnostic efficace pour le diagnostic de la leucémie et/ou d'autres types de malignités hématologiques.

Toutefois, bien que ce document illustre l'utilité de la spectroscopie FTIR dans le cadre du diagnostic des leucémies, ce document ne donne pas d'outils permettant d'affiner le diagnostic selon des sous-type de pathologies, ni même de prédire une évo-lutivité de la maladie.

Le Corvée et al., PLOS ONE, 12(10): 1-15, 2017, décrit une méthode de détermination du risque de mortalité à court terme de patients atteints d'ascite et de cirrhose, utilisant la spectroscopie à rayonnement moyen infra-rouge (MIR).

Sheng et al., Spectrochimica Acta Part A: Molecular and Biomolecular Spectroscopy, 228-232, 2013, décrit une méthode diagnostique pour distinguer des patients atteints de leucémie d'individus sains, utilisant la spectroscopie infra-rouge à transformée de Fourier (FTIR).

Aussi, existe-t-il un besoin de fournir une méthode permettant d'affiner la détection des sous-types de leucémies, et en particuliers des leucémies myéloïdes.

L'invention a pour but de pallier ces manques de l'art antérieur.

Un des buts de l'invention est de fournir une méthode de pronostic permettant de déterminer de manière simple le pronostic de survenue d'une hémopathie chez un individu.

L'invention concerne donc une méthode de détermination, notamment in vitro, du risque pour un individu de développer une hémopathie maligne selon la revendication 1.

L'invention repose sur la constatation surprenante faite par les inventeurs que la détermination d'un spectre infrarouge de simples échantillons sanguins obtenus à partir d'individus permet d'obtenir des informations concernant le risque de développer pour ledit individu une hémopathie.

La spectroscopie est un procédé simple et rapide, qui ne nécessite aucuns réactifs pour être mise en œuvre (outre du matériel approprié), qui permet d'obtenir des informations concernant la structure macromoléculaire des composés contenus dans un échantillon biologique. Typiquement, les spectres infrarouges (FTIR) sont composés de nombreuses bandes d'absorption, chacune correspondant à des groupes fonctionnels spécifiques associés à des composants cellulaires tels que des lipides, des protéines, des glucides et des acides nucléiques. Toutes modifications physiologiques survenant chez un individu, y compris carcinogenèse, peuvent conduire à des changements globaux de du métabolisme, ce qui modifiera les spectres d'absorption lorsque l'échantillon sera analysé par des techniques FTIR. Par conséquent, la FTIR est couramment utilisée pour faire la distinction entre un tissu normal et un tissu anormal par analyse des changements dans des bandes d'absorption des molécules.

La partie infrarouge du spectre électromagnétique est divisée en trois régions : le proche, le moyen et le lointain infrarouges, nommés en relation avec le spectre visible. L'infrarouge lointain, allant approximativement de 400 à 10 cm-1 (1000-25 µm, en pratique gamme 1000-30 µm), mitoyen de la région micro-onde, a une énergie faible et peut être utilisé pour la spectroscopie rotationnelle. Le rayonnement infrarouge moyen, allant approximativement de 4000 à 400 cm-1 (25-2,5 µm, en pratique gamme 30-1,4 µm) peut être utilisé pour étudier les vibrations fondamentales et la structure vi-brationnelle associée. Le proche infrarouge, plus énergétique, allant approximativement de 14000 à 4000 cm-1 (2,5-0,7 µm, en pratique gamme 1,4-0,8 µm) peut exciter les vibrations harmoniques. Les dénominations et classifications de ces sous-régions sont essentiellement des conventions. Dans l'invention on se réfèrera à la spectroscopie dans l'infrarouge moyen selon la définition ci-dessus.

Le spectre infrarouge d'un échantillon est établi en faisant passer un faisceau de lumière infrarouge au travers de cet échantillon. L'examen de la lumière transmise indique la quantité d'énergie absorbée à chaque longueur d'onde. Il peut être réalisé avec un faisceau monochromatique, avec une modification de la longueur d'onde dans le temps, ou en utilisant un instrument à transformée de Fourier afin de mesurer toutes les absorbances simultanément par interférométrie. On peut alors produire les spectres en absorbance ou en transmittance, et analyser les longueurs d'onde d'absorption. L'analyse de ces caractéristiques reflète les structures moléculaires de l'échantillon.

Cette technique fonctionne quasiment exclusivement sur les échantillons présentant des liaisons covalentes. Des spectres simples sont obtenus à partir d'échantillons avec peu de liaisons actives dans l'infrarouge et avec de hauts degrés de pureté. Les structures moléculaires plus complexes conduisent à plus de bandes d'absorption et donc à des spectres plus complexes mais est tout de même utilisée pour la caractérisation de mélanges très complexes.

La méthode décrite dans la présente invention réside dans la simplicité des étapes mises en œuvre :
- une première étape consiste à obtenir un spectre infrarouge à partir d'un échantillon biologique d'un individu, et
- la seconde étape consiste en la comparaison du spectre obtenu à l'étape précédente avec un ou plusieurs spectres de référence afin de conclure au risque ou non de développer une hémopathie.

Dans l'invention, on entend par « hémopathie » toute pathologie affectant les composants du sang, et en particulier les hémopathies malignes telles que les leucémies, les lymphomes, les myélomes ainsi que les syndromes myélodysplasiques et myéloprolifératifs.

Dans l'invention le résultat de l'exposition au rayonnement infrarouge sera traité, notamment par transformée de Fourier pour obtenir une signature spectrale caractéristique d'un échantillon donné.

Plus particulièrement, l'intérêt sera porté sur les nombres d'onde (inverse de la longueur d'onde) spécifiques suivant : 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm₋¹, 1674 cm⁻¹, 1676 cm⁻¹, 1697 cm⁻¹, et 2852 cm⁻¹, ainsi qu'à l'intensité relative de chacun des pics correspondant à ces nombres d'onde suite à la transformation de Fourier.

Aussi, si l'on résume, un échantillon donné est soumis à un rayonnement infrarouge moyen, pour obtenir un spectre qui sera traité par transformée de Fourier pour obtenir une signature spectrale pour au moins les nombres d'ondes 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹, et 2852 cm⁻¹.

Une fois cette signature spectrale obtenue, celle-ci est comparée à une signature spectrale, ou plusieurs signatures spectrales de référence.

Ces signatures spectrales de référence sont obtenues à partir d'échantillons de référence soumis au même traitement infrarouge (et transformée de Fourier) que l'échantillon analysé. Pour que la comparaison soit la plus efficace, il est indispensable que les signatures spectrales de référence soient obtenues à partir d'échantillons biologiques de même nature (par exemple du sang, du sérum, du plasma etc...) que l'échantillon biologique testé. Ainsi, à titre d'exemple, si un échantillon de sang est testé pour un individu selon la méthode de l'invention, le ou les échantillons de référence seront ceux obtenus à partir d'autres échantillons de sang.

Les signatures spectrales de référence sont obtenues à partir d'individus de référence qui peuvent être soit des individus sains, c'est à dire des individus ne présentant aucune pathologie, soit des individus présentant une maladie dont les symptômes sont différents de ceux d'une hémopathie, telle que définie dans l'invention.

Un individu de référence peut également correspondre à l'individu testé selon la méthode de l'invention, les échantillons de référence ayant été prélevés avant que ledit individu ait, ou soit susceptible, de développer une hémopathie.

Lors de la comparaison entre la signature spectrale de l'individu avec la ou les signatures spectrales de référence, l'intensité (absorbance) des différents pics correspondant aux nombres d'onde susmentionnée est comparée.

De cette comparaison, il en découle que si toutes les intensités des pics correspondant auxdits nombres d'onde sont significativement différentes (augmentation ou diminution) par rapport à l'intensité de ces mêmes pics dans les signatures spectrales de référence, alors ledit individu dont l'échantillon a été testé selon la méthode de l'invention sera susceptible de développer une hémopathie. La signature d'un individu donné est donc constituée d'une structure de type pattern qui est répartie sur un ensemble de variables spectrales (16 dans le cas présent). Une signature de référence (sain ou pathologique) est donc constituée par un « profil », le pattern. Pour chaque type de patient, un profil est identifié qui est spécifique de l'état physiologique de l'individu. L'identification de l'état physiologique d'un individu quelconque repose donc sur la comparaison de ce profil (ou pattern) par rapport à ceux de références. Un calcul de distance entre pattern de l'individu et pattern(s) de référence permet d'attribuer cet individu à une classe/catégorie particulière (sain ou malade par exemple). L'individu sera « classé » selon le pattern de référence qui est à la plus courte distance / le plus proche dans un espace à (ici par exemple) 16 dimensions

Aussi, sur la base d'un spectre FTIR obtenu à partir d'un échantillon biologique de sang, ou d'un sous-produit du sang, ou de moelle osseuse, il est possible de déterminer le risque de développer une hémopathie maligne chez un individu.

De manière avantageuse, l'invention concerne la méthode susmentionnée, où lorsque l'individu est susceptible de développer une hémopathie, il est en outre conclu que :
* si les intensités d'un second groupe de pics de la signature spectrale dudit individu sont significativement différentes des intensités de ces mêmes pics obtenus dans la ou les signatures spectrales de référence, alors l'individu est susceptible de développer une leucémie,
le second groupe de pics correspondant aux nombres d'onde du premier groupe suivant : 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ et 1338 cm⁻¹,
* sinon l'individu est susceptible de développer un syndrome myélodysplasique.

Les inventeurs ont mis en évidence que si le premier groupe de pics, ou nombre d'onde, permet de déterminer si un individu est susceptible de développer une hémopathie, il est possible en étudiant un second groupe de pics de la signature spectrale et selon les différences obtenues déterminer si l'individu en question, testé selon la méthode de l'invention, est susceptible de développer une leucémie ou un syndrome myélodysplasique.

Les syndromes myélodysplasiques (SMD) sont des hémopathies clonales acquises de la cellule souche hématopoïétique médullaire, avec prolifération excessive de progéniteurs myéloïdes qui se différencient de manière anormale (= dysmyélopoïèse). L'apoptose excessive des précurseurs aboutit à un défaut de production et à des cytopénies périphériques (= hématopoïèse inefficace).

Il en existe plusieurs classes, définies par l'OMS (2016) en fonction de la nature et du nombre des cytopénies, de signes de myélodysplasie (anomalies morphologiques des cellules médullaires), de la présence ou non d'un excès de blastes.

L'évolution est prolongée et relativement indolente dans 70% des cas, avec aggravation progressive des cytopénies (insuffisance médullaire). Dans 30% des cas l'évolution est plus rapide et plus agressive vers une leucémie aiguë myéloïde par accumulation de blastes, expliquant pourquoi les SMD sont également appelés "états pré-leucémiques".

Selon ce mode de réalisation, l'étude des deux premiers groupes de nombres d'onde de la signature spectrale ne permet pas de distinguer les SMD dit « à faible risque » des SMD dits « à haut risque » de transition vers une leucémie secondaire.

Dans l'invention, on distingue notamment deux types de leucémies, en particulier deux types de leucémies aigues myéloïdes : les leucémies aigues myéloïdes de novo, et les leucémies myéloïdes secondaires.

Les leucémies de novo surviennent chez les patients de manière spontanée, et directement sans qu'il soit détecté chez le patient au préalable de syndrome myéloprolifératif. De telles leucémie peuvent apparaître du fait de l'accumulation simultanée d'anomalies affectant la prolifération et la différenciation cellulaire des progéniteurs myéloïdes.

Les leucémies myéloïdes aigues secondaires surviennent quant à elles à la suite d'une aggravation d'un syndrome myéloprolifératif, notamment en accumulant des anomalies génétiques inhibant la différenciation des progéniteurs.

Dans un mode de réalisation avantageux, l'invention concerne la méthode susmentionnée, où lorsque l'individu est susceptible de développer un syndrome myélodysplasique, il est conclu que
* si les intensités d'un troisième groupe de pics de la signature spectrale dudit individu sont significativement différentes des intensités de ces mêmes pics obtenus dans la ou les signatures spectrales de référence l'individu est susceptible de développer un syndrome myélodysplasique à bas risque
le troisième groupe de pics correspondant aux nombres d'onde du premier groupe suivant : 3060cm⁻¹, 3062cm⁻¹, 3396cm⁻¹, 3384cm⁻¹ et 3052cm⁻¹,
*sinon l'individu est susceptible de développer un syndrome myélodysplasique à haut risque.

A l'aide des premier, second et troisième groupes de pics de la signature spectrales, il est possible, de discriminer la survenue d'un syndrome myélodysplasique à bas risque ou à haut risque.

De manière avantageuse, l'invention concerne la méthode décrite ci-dessus, où lorsque l'individu est susceptible de développer une leucémie, il est conclu que :
* si les intensités d'un quatrième groupe de pics de la signature spectrale dudit individu sont significativement différentes des intensités de ces mêmes pics obtenus dans la ou les signatures spectrales de référence l'individu est susceptible de développer une leucémie secondaire,
le quatrième groupe de pics correspondant aux nombres d'onde du premier groupe suivant : 3270cm⁻¹, 3268cm⁻¹, 3266cm⁻¹, 3264cm⁻¹, 3192cm⁻¹, 3190cm⁻¹, 2850cm⁻¹, 2840cm⁻¹, 1707cm⁻¹, 1705cm⁻¹, 1664cm⁻¹, 1662cm⁻¹, 1633cm⁻¹, 1631cm⁻¹, 1493cm⁻¹, 1491cm⁻¹, 1489cm⁻¹, 1458cm⁻¹, 1456cmy et 1256 cm⁻¹,
* sinon l'individu sera susceptible de développer de développer une leucémie de novo.

A l'aide des premier, second et quatrième groupes de pics de la signature spectrale, il est possible, de discriminer la survenue d'une leucémie de novo ou d'une leucémie secondaire.

De manière encore plus avantageuse, l'invention concerne la méthode susmentionnée, où ledit échantillon biologique est un échantillon de plasma sanguin.

L'échantillon biologique avantageux pour mettre en œuvre l'invention est le plasma sanguin qui peut être obtenu lors d'une prise de sang de routine.

Le plasma sanguin est la fraction liquide du sang. Il constitue environ 55 % du volume sanguin et sert à véhiculer les cellules sanguines, les plaquettes et les hormones et autres composants solubles (protéines, métabolites, hormones, sels, ...) à travers l'organisme.

De manière avantageuse, l'invention concerne la méthode susmentionnée, où la signature spectrale et la ou les signatures spectrales de référence sont obtenues par la dérivée seconde des données de spectroscopie infrarouge respectives.

Le calcul de la dérivée seconde de chacun des spectres est avantageusement réalisé. Cette dérivée seconde améliore la résolution des bandes infrarouges ainsi que la discrimination des pics obtenus. La dérivation seconde des spectres infrarouge apporte une nette amélioration par rapport à l'utilisation des spectres bruts (non dérivés) pour la caractérisation, et l'identification, de composés contenus dans un échantillon.

Ces traitements sont effectués avec un logiciel généralement intégré au spectromètre.

L'invention concerne également l'utilisation de la méthode selon la revendication 7.

Avantageusement, l'invention concerne l'utilisation susmentionnée, où si l'individu est susceptible de développer une hémopathie, et
* si les intensités de pics correspondant à un second groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, alors l'individu est susceptible de développer une leucémie,
ledit second groupe de nombre d'onde correspondant aux nombres d'onde suivants : 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm₋¹, 1340 cm⁻¹ et 1338 cm⁻¹,
* sinon l'individu est susceptible de développer un syndrome myélodysplasique.

De manière encore plus avantageuse, l'invention concerne l'utilisation susmentionnée, où
- si l'individu est susceptible de développer un syndrome myélodysplasique,
   * si les intensités de pics correspondant à un troisième groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, l'individu sera susceptible de développer un syndrome myélodysplasique à bas risque,
   ledit troisième groupe de nombre d'onde correspondant aux nombres d'onde suivants : 3060 cm⁻¹, 3062 cm⁻¹, 3396 cm⁻¹, 3384 cm⁻¹ et 3052 cm⁻¹,
   * sinon l'individu sera susceptible de développer un syndrome myélodysplasique à haut risque, et
- si l'individu est susceptible de développer une leucémie,
   * si les intensités de pics correspondant à un quatrième groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, l'individu sera susceptible de développer une leucémie secondaire,
   ledit quatrième groupe de nombre d'onde correspondant aux nombres d'onde suivants :3270 cm⁻¹, 3268 cm⁻¹, 3266 cm⁻¹, 3264 cm⁻¹, 3192 cm⁻¹, 3190 cm⁻¹, 2850 cm⁻¹, 2840 cm⁻¹, 1707 cm⁻¹, 1705 cm⁻¹, 1664 cm⁻¹, 1662 cm⁻¹, 1633 cm⁻¹, 1631 cm⁻¹, 1493 cm⁻¹, 1491 cm⁻¹, 1489 cm⁻¹, 1458 cm⁻¹, 1456 cm⁻¹ et 1256 cm⁻¹,
   * sinon l'individu sera susceptible de développer de développer une leucémie de novo.

L'invention concerne en outre un produit programme d'ordinateur, ou logiciel, selon la revendication 10.

Avantageusement ledit programme est compris dans un support d'enregistrement de données lisible par ordinateur. Un tel support n'est pas limité à un support d'enregistrement portable tel qu'un CD-ROM mais peut également faire part d'un dispositif comprenant une mémoire interne dans un ordinateur (par exemple des RAM et/ou ROM), ou de dispositif à mémoires externes tels des disques durs ou des clefs USB, ou un serveur à proximité ou à distance.

De manière avantageuse, le produit programme d'ordinateur ou logiciel susmentionné est conçu pour permettre,
- le traitement des spectres infrarouge afin d'obtenir la signature spectrale,
- la comparaison de la signature spectrale obtenue à partir de l'échantillon biologique de l'individu testé avec les signatures spectrales de référence,
- ou les deux.

Le produit programme d'ordinateur ou logiciel susmentionné peut également avantageusement être utilisé pour réaliser une dérivée seconde des spectres obtenus après la transformée de Fourier.

L'invention sera mieux comprise à la lumière de la figure et des exemples suivants.

### Brève description des figures

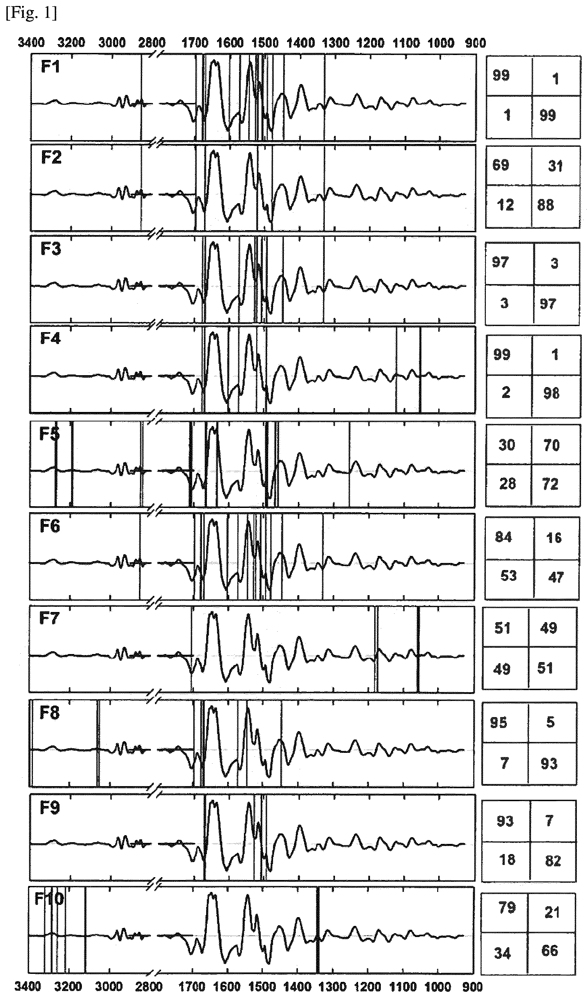

[Fig.1] La [Fig.1] représente un tableau montrant les résultats synthétiques de la discrimination intergroupes G0, G1, G2, G3 et G4. G0 : Sains ; G1 : Syndromes myélodysplasiques de faible risque ; G2 : Syndromes myélodysplasiques de haut risque ; G3 : Leucémie aigüe myéloïde secondaire et G4 : Leucémie aigüe myéloïde de novo.

### Exemples

### Exemple 1 : classification

### Matériel et Méthodes

### A- Échantillons biologiques

Les plasmas sanguins ont été isolés par double centrifugation (700g, 10 min) à partir de sang total de malades (n = 70) inclus dans l'étude MYLESYM (ID-RCE 2011-A00271-40) ayant donné leur consentement. Ils ont été comparés aux plasmas de 99 donneurs sains recrutés dans le cadre de l'étude HEALTHOX (ClinicalTrials.gov # NCT02789839).

Les échantillons de plasmas (50 µL) sont congelés à -80°C jusqu'à leur utilisation. Une fois décongelés à température ambiante et homogénéisés à l'aide d'un agitateur type vortex, 5 µL sont déposés et étalés sur une plaque multipuits de 96 positions en silice ou en séléniure de Zinc (ZnSe), matériaux transparents dans l'IR, mis à sécher 15 min en étuve à 35°C et analysés à l'aide d'un spectrophotomètre MIR.

Alternativement les échantillons (20µL) peuvent être déposés sur lame de microscope et laissés à l'air libre pour séchage pendant 24 heures.

### B- Acquisition des échantillons de plasmas sanguins

Échantillons n= 169 (99 témoins sains / 70 malades)
G0 : Sains (60 Femmes, 39 Hommes),
G1 : Syndromes myélodysplasiques de faible risque : SMD-LR (12 Femmes, 26 Homme),
G2 : Syndromes myélodysplasiques de haut risque : SMD-HR (5 Femmes, 4 Hommes),
G3 : Leucémie aigüe myéloïde secondaire LAM Sec (3 Femme, 8 Hommes),
G4: Leucémie aigüe myéloïde de novo : LAM-Novo (9 Femmes, 7 Hommes).

### C- Microscope LUMOS (Bruker)

Le LUMOS est un microscope IRTF autonome équipé d'un spectromètre intégré. L'innovation apportée par un cristal motorisé permet au système de passer du mode Transmission au mode Réflexion et ATR sans aucune intervention de l'opérateur et de mesurer, de façon entièrement automatisée, un échantillon ou un bruit de fond, même lorsque le mode ATR est activé. Ce type d'appareil est adapté pour les mesures en réflexion totale atténuée (ATR) si les échantillons ont été déposés sur lames de verre, matériau non-transparent dans le moyen infrarouge.

Un analogue au IR Biotyper de Bruker peut également être utilisé. L'instrument est piloté à partir du logiciel propriétaire de Bruker qui est OPUS. Ce type de spectrophotomètre permet d'acquérir facilement une centaine de spectres par jour, préparation des plaques comprise. Les spectres infrarouges sont donc collectés en mode « Transmission », le faisceau infrarouge passant à travers l'échantillon et la plaque multi-puits qui est du ZnSe cristallisé, matériau transparent dans le moyen infrarouge.

Dans tous les cas (mesures en reflexion ou en transmission) la résolution spectrale est de 4 cm-1 et 64 à 128 scans sont moyennés. Le bruit de fond est mesuré à travers un puits vide. Les spectres d'absorption « bruts », (tels quels) sont ensuite sauvegardés puis exportés au format Jcamp (format « ouvert ») à l'aide d'une routine macro sous OPUS.

### D- Test qualité

Afin d'évaluer la qualité des spectres en fonction des plusieurs paramètres : La vapeur d'eau, Le rapport signal/eau, L'intensité du bruit... et identifier les spectres aberrants (outliers) qui ne respectent pas certains critères. Pour vérifier l'état d'hydratation de l'échantillon, on s'assure que la bande Amide 1 des protéines (1650 cm ⁻¹) soit 2 ou 3 fois plus importante que la bande de (3400 cm⁻¹) qui reflète essentiellement l'eau liquide.

### E- Correction de ligne de base

La variation de la ligne de base peut être causée par une modification des conditions lors de l'acquisition ou des variations liées à l'instrumentation ou à l'environnement (exemple: température).

### F- Normalisation

Dans le but de minimiser les différences d'intensité du signal qui ne sont pas liées à l'échantillon mais à l'instrumentation, les spectres bruts sont normalisés par un algorithme anti-éparpillement MSC (Multiplicative Scattering Correction) : c'est une méthode de correction spectrale (Sun. D-Wet al. 2009).

### G- Filtration

Ce traitement consiste à choisir le domaine spectral d'intérêt en fonction de l'échantillon. Sur l'échantillon d'intérêt (plasma), on fixe un domaine spectral de 3800 à 940 cm⁻¹. Sur la bande 2800 à 1800 cm⁻¹, le spectre est tronqué car il ne contient aucune information d'intérêt pour les analyses réalisées, on y retrouve principalement la contribution du CO₂ atmosphérique qui reflète des variations environnementales.

### H- Dérivées seconde

La dérivation permet d'améliorer la résolution des spectres et donc de limiter les effets du chevauchement de bandes. On notera que le passage du spectre brut à la dérivée seconde diminue le rapport signal/bruit {Martens H et al. 2002}. Les dérivées seconde des spectres sont calculées en utilisant 13 points pour le lissage Savitsky-Golay par fenêtre glissante.

### Analyses des données spectrales

### A- Méthodes statistiques

### 1. Analyse non supervisée (analyse descriptive)

ACP: Analyse en Composantes Principales: C'est une analyse réalisée en première intention, permettant de comprendre la structure des données et d'identifier d'éventuels spectres dits *outliers* qui présentent un profil spectral différent pour des raisons techniques, une mauvaise acquisition par exemple, ou pour des raisons biochimiques.

### 2. Analyse supervisée (analyse explicative)

R-PLS: Régression par la méthode des moindres carrés (R-Partial Least Squares): C'est une méthode statistique qui permet de modéliser les relations complexes entre des variables quantitatives observées, dites manifestes, et des variables latentes (spectre MIR)

### B- Sélection des variables

La sélection des variables par algorithme génétique ou méthode FADA permet d'identifier un sous-ensemble de variables discriminantes pour préciser les types de marqueurs biochimiques modifiés par la pathologie (Trevisan J et al. 2014). Elle présente deux avantages :
∘ Améliorer les performances du modèle en prédiction (Jouan-Rimbaud D et al. 1995).
∘Améliorer l'interprétation des modèles et comprendre le système étudié.

### C- Algorithmes FADA et GLM

C'est une analyse par LDA/Régression logistique qui permet d'identifier les variables spectrales les plus discriminantes ici entre les sains et les différents groupes de malades. A partir de ces variables les plus discriminantes, une sélection progressive est opérée pour identifier les quelques variables qui permettent d'avoir les meilleures spécificités et sélectivités.

### D- Principe de prédiction

Les résultats des tests d'analyse discriminante sont représentés classiquement sous forme de matrice de confusion à interpréter comme montré ci-dessous dans le tableau 1.

**[Tableaux 1]**

| | | Mesuré (diagnostic) | | Bien classé (%) |
|---|---|---|---|---|
| | | Positif | Négatif | |
| Prédiction IR | Positif | **VP** | FP | VPP = VP/(VP+FP) |
| | Negatif | FN | **VN** | VPN = VN/(VN+FN) |
| | | Se = VP/(VP + FN) | Sp = VN/(FP + VN) | |

Les nombres en gras figurent les échantillons BIEN classés, et soulignés, les MAL classés.

Les VPP et VPN présentent le pourcentage de réussite de classification

VP : Vrai positif, VN : Vrai négatif, FN: Faux négatif, FP: Faux positif

VPP : la valeur prédictive positive, VPN : la valeur prédictive négative

Se : Sensibilité, Sp : Spécificité.

Les résultats obtenus pour cette étude sont montrés dans le tableau 2 suivant et dans la [Fig.1].

**[Tableaux2]**

| **TEST** | **n** | **Variables discriminantes (cm⁻¹)** | **Groupes discriminés** | | **Mesuré** | | **Se** | **Sp** | **Bien classés (%)** |
|---|---|---|---|---|---|---|---|---|---|
| | | | | | | | | | |
| | | | | | | | | | |
| F1 | 169 | 1330, 1445, 1478, 1493, 1505, 1507, 1520, 1526, 1544, 1571, 1602, 1668, 1674, 1676, 1697, 2852 | prédit | G0 | **3197** | 6 | 0,99 | 0,99 | 99 |
| | | | | [G1-G4] | 3 | **2394** | | | 99 |
| F2 | 137 | 1330, 1478,1520, 1668, 1697, 2852 | prédit | G0 | **1611** | 723 | 0,80 | 0,79 | 69 |
| | | | | G1 | 389 | **2877** | | | 88 |
| F3 | 153 | 1330, 1445, 1493, 1505, 1507, 1520, 1526, 1571, 1666, 1668, 1674 | prédit | G0 | **3242** | 94 | 0,98 | 0,94 | 97 |
| | | | | [G1-G3] | 58 | **1706** | | | 97 |
| F4 | 115 | 1054, 1056, 1122, 1124, 1493, 1520, 1571, 1602, 1666, 1668, 1674 | prédit | G0 | **3189** | 39 | 0,99 | 0,93 | 99 |
| | | | | G4 | 11 | **561** | | | 98 |
| F5 | 23 | 3270, 3268, 3266, 3264, 3192, 3190, 2850, 2840, 1707, 1705, 1664, 1662, 1633, 1631, 1493, 1491, 1489, 1458, 1456, 1256 | prédit | G3 | **128** | 292 | 0,32 | 0,70 | 30 |
| | | | | G4 | 272 | **708** | | | 72 |
| F6 | 47 | 3060, 3062, 3396, 3384, 3052 | prédit | G1 | **1323** | 239 | 0,95 | 0,20 | 84 |
| | | | | G2 | 68 | **61** | | | 47 |
| F7 | 16 | 1705, 1182, 1174, 1060, 1058, 1056 | prédit | G2 | **191** | 186 | 0,63 | 0,38 | 51 |
| | | | | G3 | 109 | **114** | | | 51 |
| F8 | 146 | 3339, 3384, 3062, 3060, 3052 | prédit | G0 | **3194** | 156 | 0,96 | 0,90 | 95 |
| | | | | [G1+G2 ] | 106 | **1444** | | | 93 |
| F9 | 122 | 1668, 1666, 1526, 1507, 1505, 1493 | prédit | G0 | **3175** | 238 | 0,96 | 0,70 | 93 |
| | | | | [G3+G4 ] | 125 | **562** | | | 82 |
| F10 | 70 | 3316, 3283, 3281, 3256, 3118, 3116, 1345, 1343, 1340, 1338 | prédit | [G1+G2 ] | **1376** | 364 | 0,86 | 0,55 | 79 |
| | | | | [G3+G4 ] | 224 | **463** | | | 66 |

Cette étude établit que les syndromes myélodysplasiques et les leucémies aigus (de novo ou secondaires) s'accompagnent de modifications métaboliques distinctes qui sont révélées à travers les signatures spectrales IVIIR spécifiques («codes barres» spécifiques). Ceci ouvre des possibilités intéressantes en termes de diagnostic précoce et rapide pour :
∘ L'identification de molécules plasmatiques qui pourraient refléter la physiopathologie et être des biomarqueurs intéressants (interprétation des signatures spectrales) ;
∘ Une aide la détection précoce des myélodysplasies ; et
∘ Une aide pour le suivi des patients SMD.

### Exemple 2

Les fichiers importés sous OPUS sont ensuite importés et transposés dans une matrice à l'aide d'un logiciel rédigé dans l'environnement R:

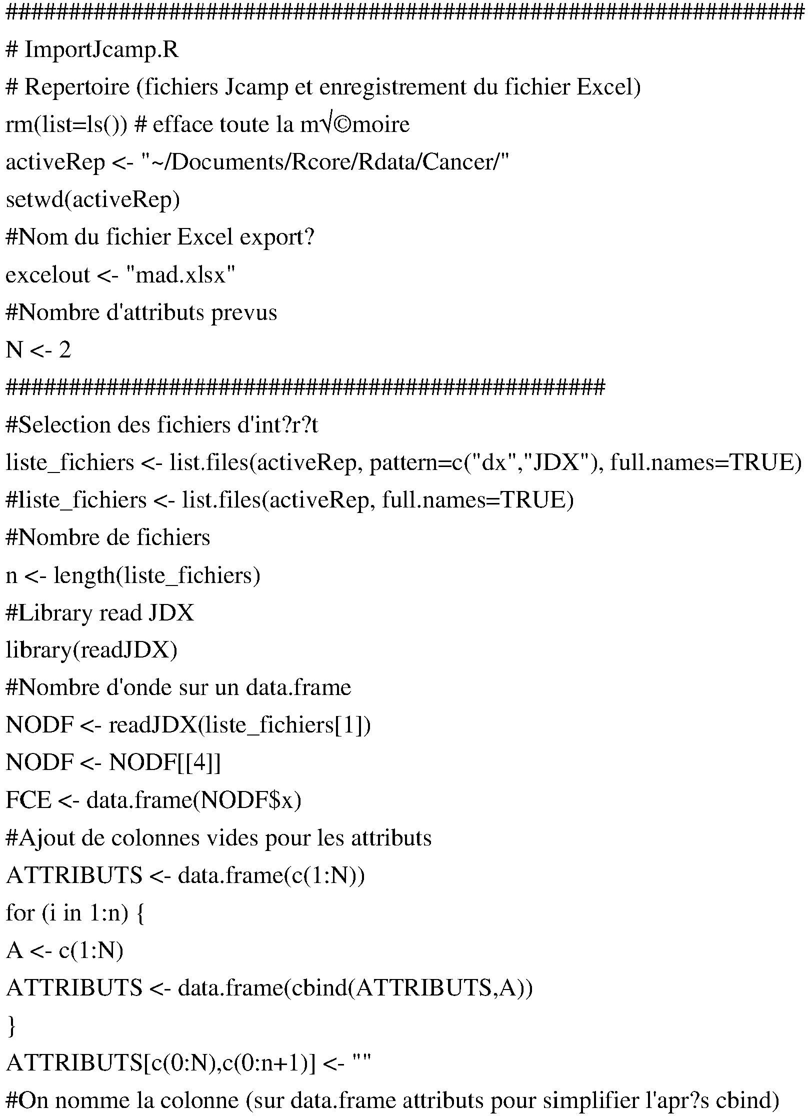

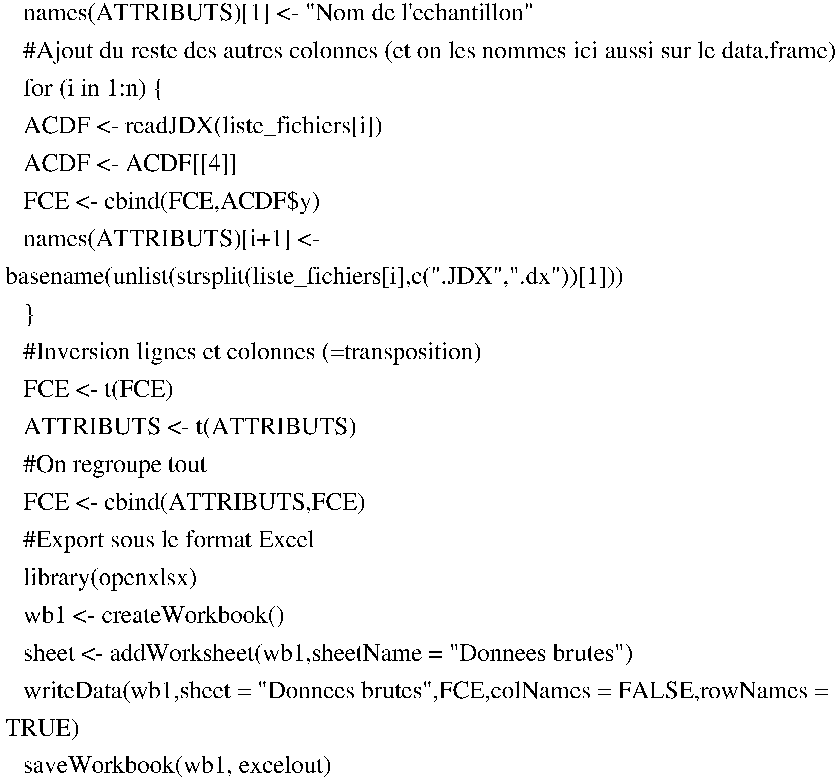

A l'issue de ce programme, un fichier Excel est créé dont le premier onglet contient la matrice transposée (1 échantillon = Une ligne) de tous les échantillons à traiter.

L'étape suivante consiste à calculer les dérivées seconde de chaque spectre, de lisser ces dérivées à l'aide de la routine Savitky et Golay de fenêtre glissante sur 11 ou 13 points puis de tronquer ces dérivées pour ne garder que les domaines fréquentiels pertinents pour l'analyse. Les domaines spectraux conservés sont, dans la quasi totalité des cas, 3800-2800 cm-1 et 1800-700 cm-1. Elles sont ensuite normalisées selon le principe de normalisation vectorielle (l'aire de la dérivée seconde est normalisée à 1). La matrice des dérivées seconde est sauvegardée dans un second onglet du même fichier Excel. Le script ci-dessous effectue ces prétraitements.

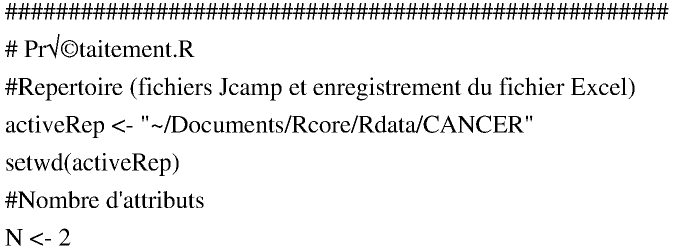

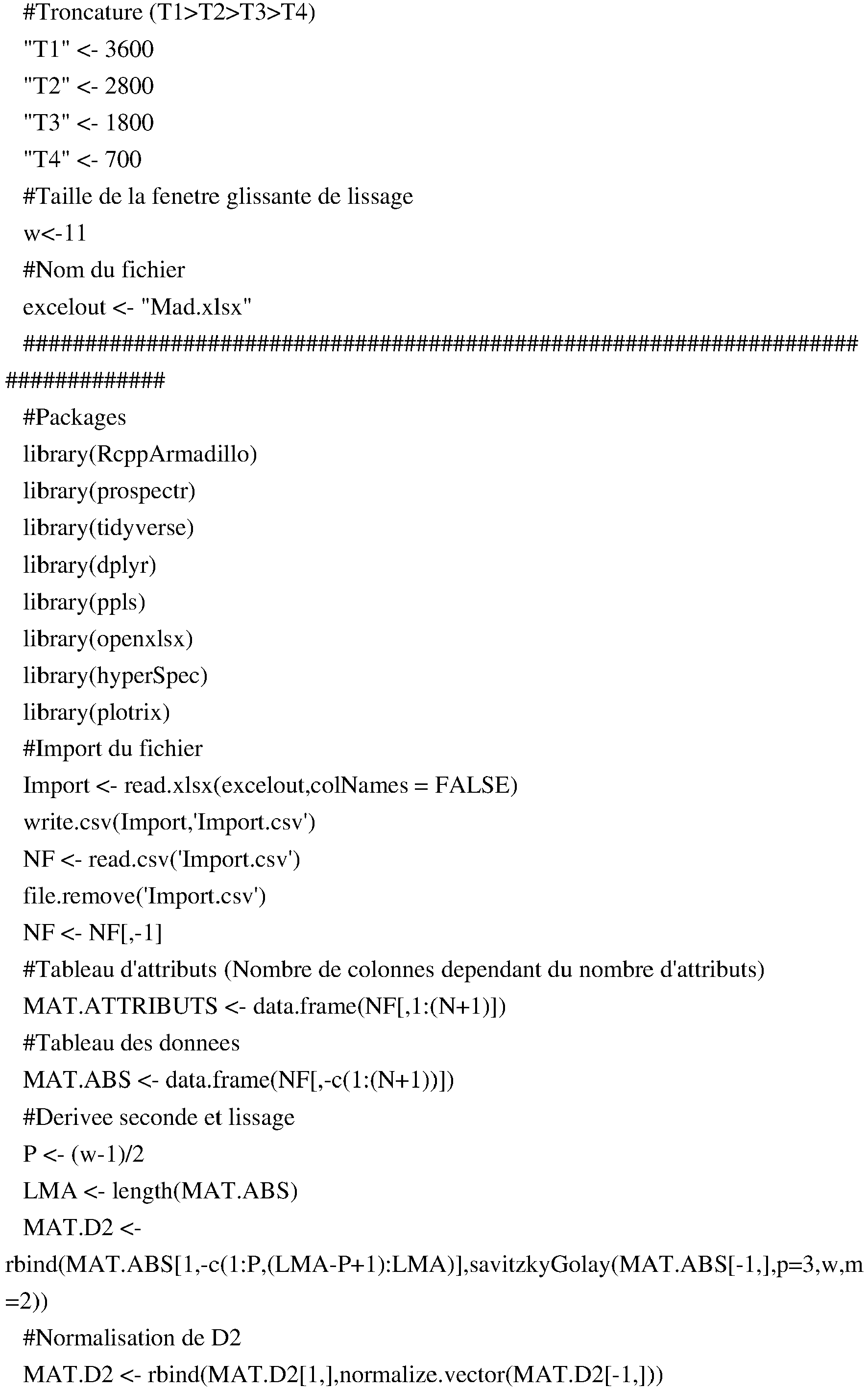

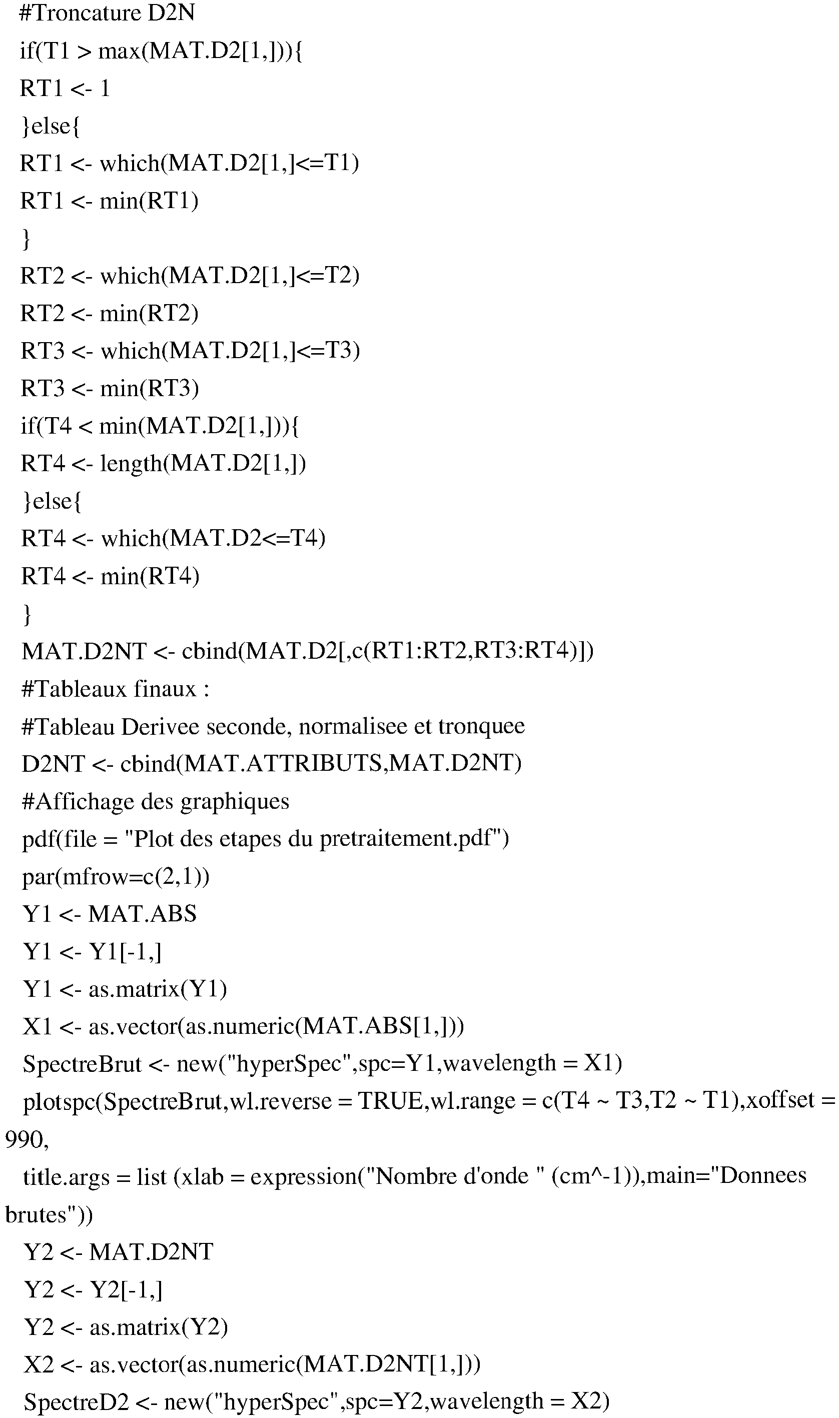

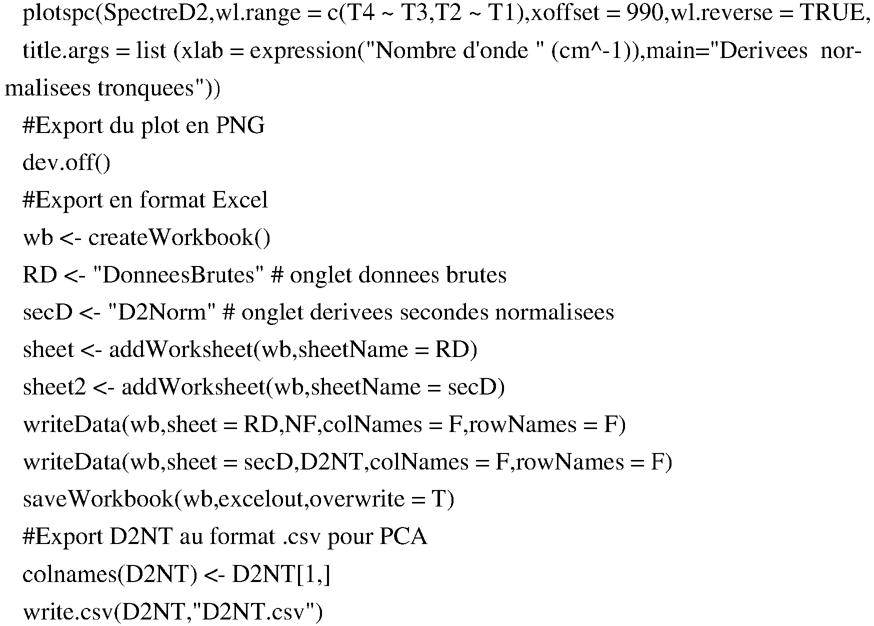

Nota Bene : ces étapes peuvent être réalisées avec n'importe quel logiciel de calcul. Les opérations mathématiques étant standard. Il importe toutefois de respecter l'ordre dans lequel elles sont effectuées.

Certains auteurs préfèrent travailler à partir des spectres bruts corrigés poyr l'éparpillement (routine Multiple Scattering Correction ou MSC). Les inventeurs constaté de meilleures performances en travaillant à partir des dérivées seconde.

Ces dérivées seconde, tronquées et normalisées sont utilisées pour la calibration des modèles prédictifs.

Le modèle prédictif repose sur une analyse de type R-PLS (Regression par moindres carrés) qui permet d'identifier les variables spectrales les plus discriminantes entre deux groupes. Ces variables sont ordonnées selon le nombre de fois où elles ont été sélectionnées de manière positive au cours d'un grand nombre d'itérations (100 usuellement). Des essais manuels sont ensuite effectués pour réduire au mieux les variables qui devront être prises en compte dans le modèle prédictif. A chaque fois (pour chaque combinaison de variables) une matrice de confusion est calculée qui permet d'identifier les échantillons bien et mal classés.

Une fois cette optimisation effectuée, une validation est réalisée par la prédiction d'échantillons n'ayant pas servis à la calibration du modèle prédictif. Le script R ci-dessous permet d'effectuer ces taches.

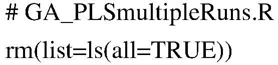

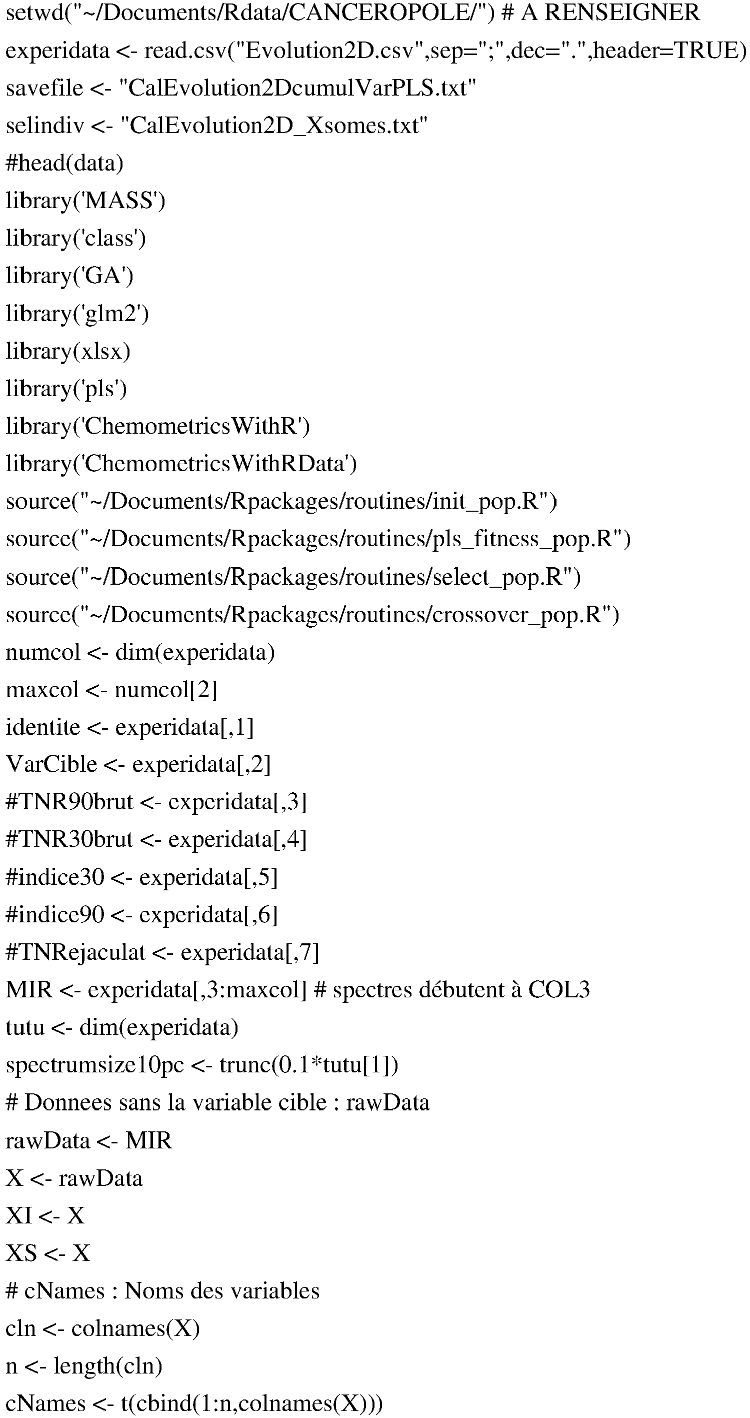

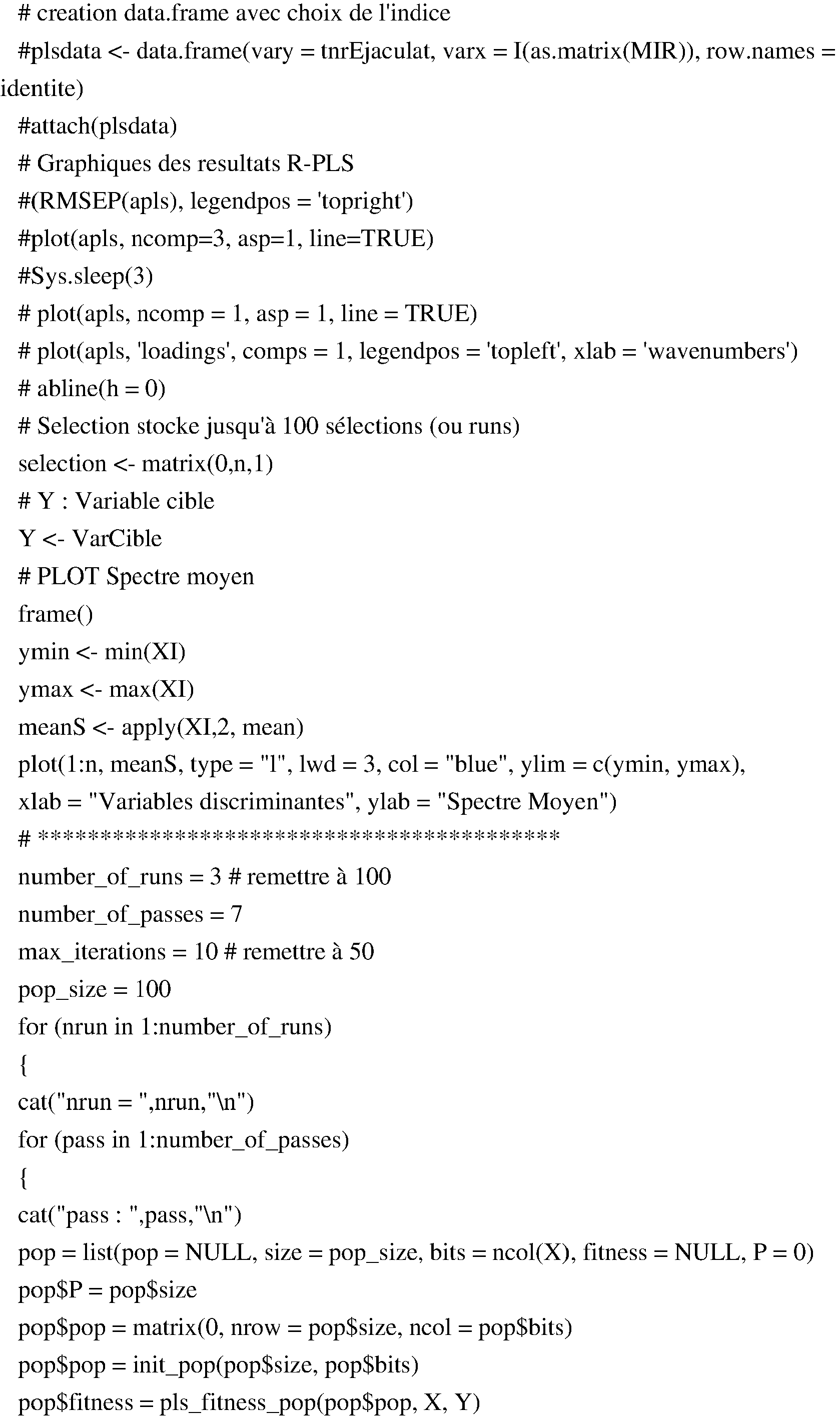

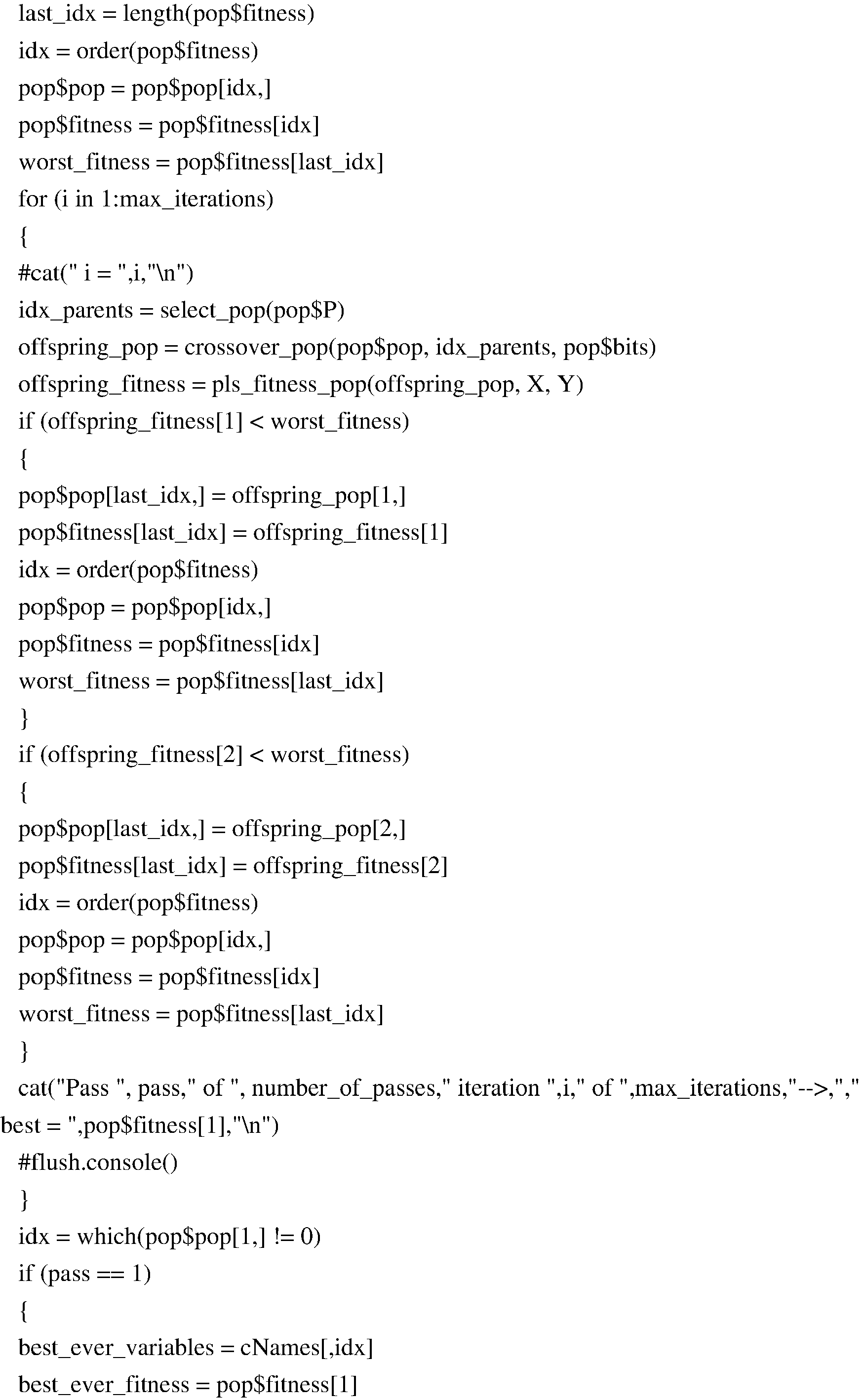

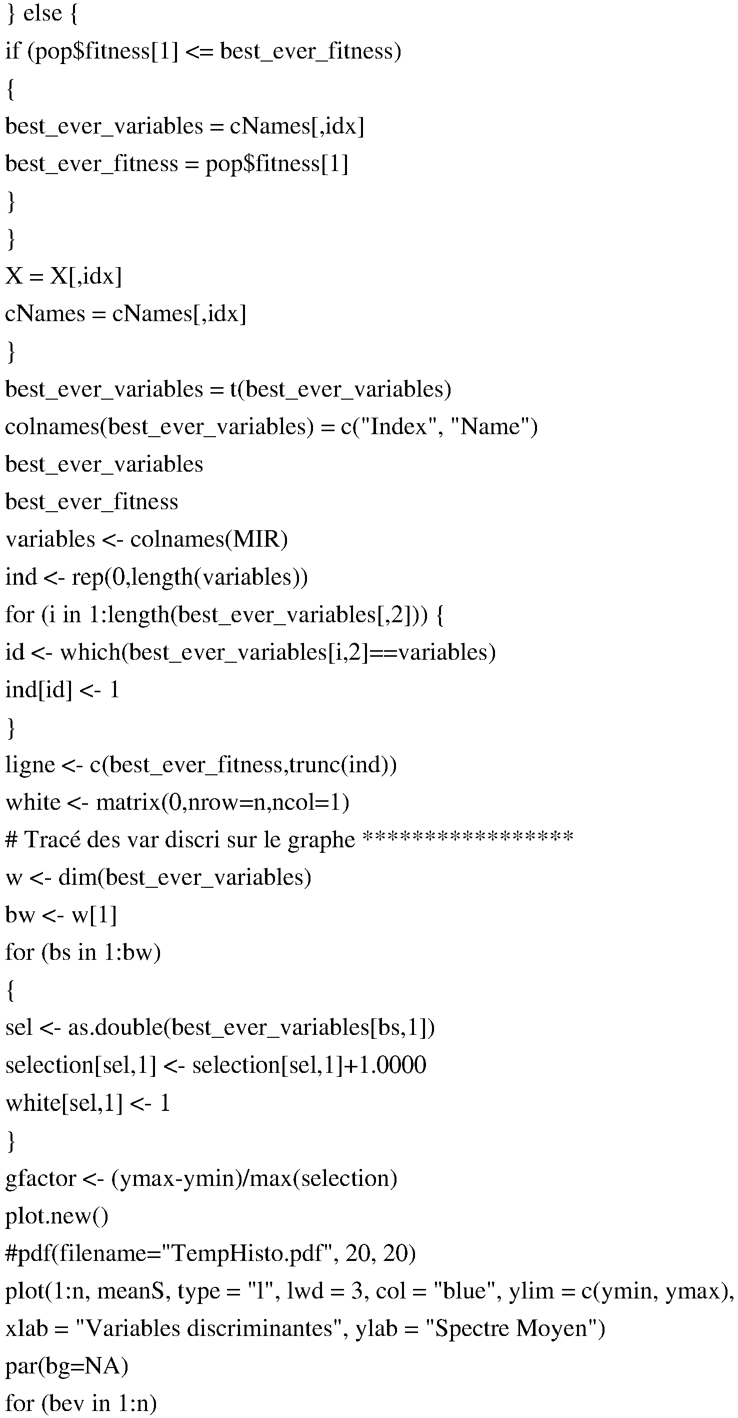

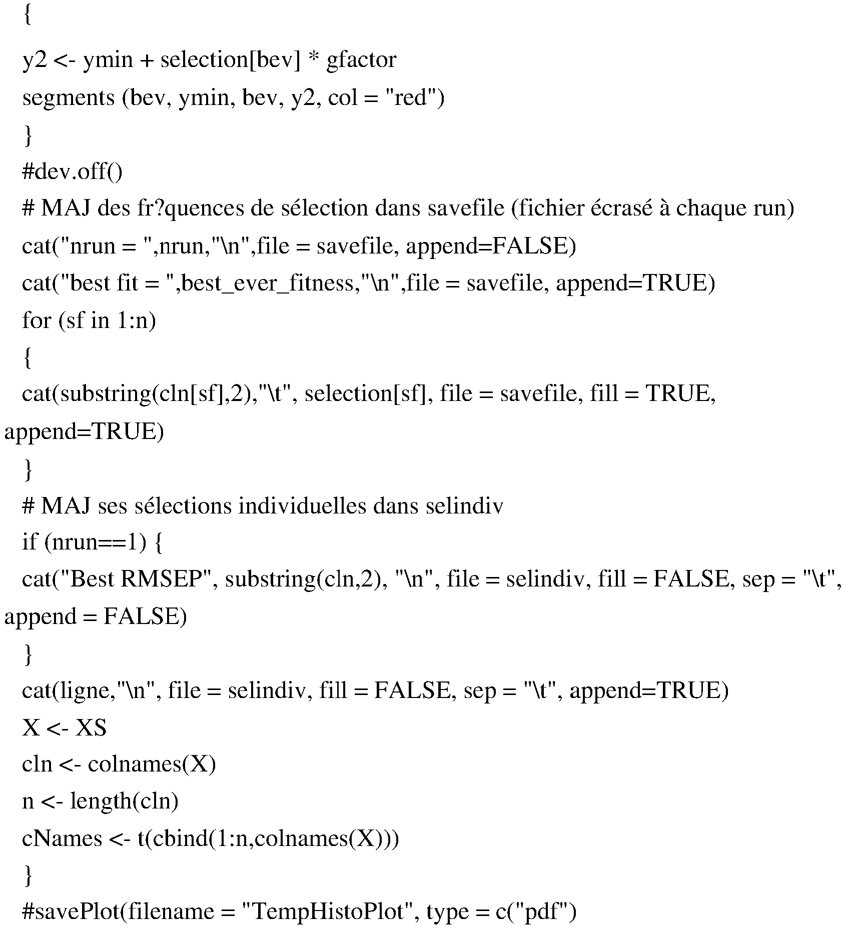

Les résultats sont présentés sous la forme de spectre dérivée seconde, identification de marqueurs (variables discriminantes) et matrice de confusion comme cela est identifié à la [Fig.1].

L'invention n'est pas limitée aux modes de réalisation présentés et d'autres modes de réalisation apparaîtront clairement à l'homme du métier dans le cadre des revendications annexées.

## Revendications

1. Méthode de détermination, in vitro, du risque pour un individu de développer une hémopathie maligne à partir d'un échantillon biologique de sang, ou d'un sous-produit du sang, ou de moelle osseuse de cet individu, ladite méthode comprenant les étapes suivantes :
a) -exposer l' échantillon biologique à un rayonnement moyen infrarouge (MIR) de longueur d'onde variant de 4000 cm⁻¹ à 400 cm⁻¹ pour obtenir un spectre caractéristique dudit échantillon;
b) traiter par transformée de Fourier le spectre infrarouge caractéristique de l'échantillon biologique afin d'obtenir une signature spectrale constituée de pics d'absorbance caractéristiques de par leur position, ou nombre d'onde, et de leur intensité, ou absorbance, de la nature et des concentrations relatives des différentes molécules présentes dans ledit échantillon ;
c) comparer ladite signature spectrale obtenue à l'étape précédente avec une ou plusieurs signatures spectrales de référence, la dite une ou plusieurs signatures spectrales de référence étant obtenue à partir d'échantillons biologiques de même nature que l'échantillon biologique analysé d'une population d'individus de référence soumis au même traitement infrarouge (et transformée de Fourier) que l'échantillon biologique analysé ; et
d) conclure que
* si les intensités d'un premier groupe de pics de la signature spectrale dudit individu sont significativement différentes des intensités de ces mêmes pics obtenus dans la ou les signatures spectrales de référence, alors l'individu est susceptible de développer une hémopathie,
le premier groupe de pics correspondant aux nombres d'onde du premier groupe suivant : 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹, et 2852 cm⁻¹,
* sinon l'individu n'est pas susceptible de développer une hémopathie.

2. Méthode selon la revendication 1, où, lorsque l'individu est susceptible de développer une hémopathie maligne, il est en outre conclu que :
* si les intensités d'un second groupe de pics de la signature spectrale dudit individu sont significativement différentes des intensités de ces mêmes pics obtenus dans la ou les signatures spectrales de référence, alors l'individu est susceptible de développer une leucémie,
le second groupe de pics correspondant aux nombres d'onde du premier groupe suivant : 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ et 1338 cm⁻¹,
* sinon l'individu est susceptible de développer un syndrome myélodysplasique.

3. Méthode selon la revendication 2, où lorsque l'individu est susceptible de développer un syndrome myélodysplasique, il est conclu que
* si les intensités d'un troisième groupe de pics de la signature spectrale dudit individu sont significativement différentes des intensités de ces mêmes pics obtenus dans la ou les signatures spectrales de référence l'individu est susceptible de développer un syndrome myélodysplasique à bas risque,
le troisième groupe de pics correspondant aux nombres d'onde du premier groupe suivant : 3060cm⁻¹, 3062cm⁻¹, 3396cm⁻¹, 3384cm⁻¹ et 3052cm⁻¹,
*sinon l'individu est susceptible de développer un syndrome myélodysplasique à haut risque.

4. Méthode selon la revendication 2, où lorsque l'individu est susceptible de développer une leucémie, il est conclu que :
* si les intensités d'un quatrième groupe de pics de la signature spectrale dudit individu sont significativement différentes des intensités de ces mêmes pics obtenus dans la ou les signatures spectrales de référence l'individu est susceptible de développer une leucémie secondaire,
le quatrième groupe de pics correspondant aux nombres d'onde du premier groupe suivant : 3270cm⁻¹, 3268cm⁻¹, 3266cm⁻¹, 3264cm⁻¹, 3192cm⁻¹, 3190cm⁻¹, 2850cm⁻¹, 2840cm⁻¹, 1707cm⁻¹, 1705cm⁻¹, 1664cm⁻¹, 1662cm⁻¹, 1633cm⁻¹, 1631cm⁻¹, 1493cm⁻¹, 1491cm⁻¹, 1489cm⁻¹, 1458cm⁻¹, 1456cm⁻¹ et 1256 cm⁻¹,
* sinon l'individu sera susceptible de développer de développer une leucémie de novo.

5. Méthode selon l'une quelconque des revendications 1 à 4, où ledit échantillon biologique est un échantillon de plasma sanguin.

6. Méthode selon l'une quelconque des revendications 1 à 5, où le spectre et le spectre témoin sont obtenus par la dérivée seconde des données de spectroscopie infrarouge.

7. Utilisation de la méthode selon la revendication 1 pour la détermination, in vitro, du risque pour un individu de développer une hémopathie maligne à partir d'un échantillon de sang, ou d'un sous-produit du sang, ou de moelle osseuse dudit individu, où
* si les intensités de pics correspondant à un premier groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, alors l'individu est susceptible de développer une hémopathie maligne,
ledit premier groupe de nombre d'onde correspondant aux nombres d'onde suivants : 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹, et 2852 cm⁻¹,
* sinon l'individu n'est pas susceptible de développer une hémopathie maligne.

8. Utilisation selon la revendication 7, où si l'individu est susceptible de développer une hémopathie maligne, et
* si les intensités de pics correspondant à un second groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, alors l'individu est susceptible de développer une leucémie,
ledit second groupe de nombre d'onde correspondant aux nombres d'onde suivants : 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ et 1338 cm⁻¹,
* sinon l'individu est susceptible de développer un syndrome myélodysplasique.

9. Utilisation selon la revendication 8, où
- si l'individu est susceptible de développer un syndrome myélodysplasique,
* si les intensités de pics correspondant à un troisième groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, l'individu sera susceptible de développer un syndrome myélodysplasique à bas risque,
ledit troisième groupe de nombre d'onde correspondant aux nombres d'onde suivants : 3060 cm⁻¹, 3062 cm⁻¹, 3396 cm⁻¹, 3384 cm⁻¹ et 3052 cm⁻¹,
* sinon l'individu sera susceptible de développer un syndrome myélodysplasique à haut risque, et
- si l'individu est susceptible de développer une leucémie,
* si les intensités de pics correspondant à un quatrième groupe de nombres d'onde d'une signature spectrale obtenue, pour ledit échantillon, par spectroscopie infrarouge sont significativement différentes des intensités des mêmes pics obtenus à partir de la signature spectrale d'un ou plusieurs individus témoins, l'individu sera susceptible de développer une leucémie secondaire,
ledit quatrième groupe de nombre d'onde correspondant aux nombres d'onde suivants :3270 cm⁻¹, 3268 cm⁻¹, 3266 cm⁻¹, 3264 cm⁻¹, 3192 cm⁻¹, 3190 cm⁻¹, 2850 cm⁻¹, 2840 cm⁻¹, 1707 cm⁻¹, 1705 cm⁻¹, 1664 cm⁻¹, 1662 cm⁻¹, 1633 cm⁻¹, 1631 cm⁻¹, 1493 cm⁻¹, 1491 cm⁻¹, 1489 cm⁻¹, 1458 cm⁻¹, 1456 cm⁻¹ et 1256 cm⁻¹,
* sinon l'individu sera susceptible de développer une leucémie de novo.

10. Produit programme d'ordinateur comprenant des instructions de code de programme pour l'exécution des étapes b), c) et d) de la méthode selon la revendication 1 ou selon l'une quelconque des revendications 2 à 6 lorsque ledit programme est exécuté sur un ordinateur.

## Patentansprüche

1. Verfahren zur Bestimmung in vitro des Risikos einer Person, eine maligne Hämopathie zu entwickeln, aus einer biologischen Probe von Blut, einem Blutnebenprodukt oder Knochenmark derselben Person, wobei das Verfahren die folgenden Schritte umfasst:
a) Bestrahlung der biologischen Probe mit mittel-infraroter Strahlung (MIR) mit einer Wellenzahl im Bereich von 4000 cm⁻¹ bis 400 cm⁻¹, um ein für die Probe charakteristisches Spektrum zu erhalten;
b) Fourier-Transformation des charakteristischen Infrarotspektrums der biologischen Probe, um eine Spektralsignatur zu erhalten, die aus Absorptionspeaks besteht, welche charakteristisch für die Art und die relativen Konzentrationen der in der Probe vorhandenen Moleküle sind, aufgrund ihrer Lage (Wellenzahl) und ihrer Intensität (Absorption);
c) Vergleich der im vorhergehenden Schritt erhaltenen Spektralsignatur mit einer oder mehreren Referenzspektralsignaturen, wobei die eine oder mehrere Referenzspektralsignaturen aus biologischen Proben gleicher Art wie die analysierte Probe stammen, die von einer Referenzpopulation stammen und derselben Infrarotbehandlung (und Fourier-Transformation) wie die analysierte Probe unterzogen wurden; und
d) Ziehen der Schlussfolgerung, dass
- wenn die Intensitäten einer ersten Gruppe von Peaks in der Spektralsignatur der betreffenden Person signifikant von den Intensitäten derselben Peaks in den Referenzspektralsignaturen abweichen, die Person wahrscheinlich eine Hämopathie entwickeln wird,
wobei die erste Gruppe von Peaks folgenden Wellenzahlen entspricht: 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹ und 2852 cm⁻¹,
- andernfalls ist es unwahrscheinlich, dass die Person eine Hämopathie entwickelt.

2. Verfahren nach Anspruch 1, wobei, wenn es wahrscheinlich ist, dass die Person eine maligne Hämopathie entwickelt, ferner geschlossen wird, dass:
- wenn die Intensitäten einer zweiten Gruppe von Peaks in der Spektralsignatur der betreffenden Person signifikant von den Intensitäten derselben Peaks in den Referenzspektralsignaturen abweichen, die Person wahrscheinlich eine Leukämie entwickeln wird,
wobei die zweite Gruppe von Peaks folgenden Wellenzahlen aus der ersten Gruppe entspricht: 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ und 1338 cm⁻¹,
- andernfalls ist es wahrscheinlich, dass die Person ein myelodysplastisches Syndrom entwickeln wird.

3. Verfahren nach Anspruch 2, wobei, wenn es wahrscheinlich ist, dass die Person ein myelodysplastisches Syndrom entwickelt, geschlossen wird, dass:
- wenn die Intensitäten einer dritten Gruppe von Peaks in der Spektralsignatur der betreffenden Person signifikant von den Intensitäten derselben Peaks in den Referenzspektralsignaturen abweichen, die Person wahrscheinlich ein myelodysplastisches Syndrom mit niedrigem Risiko entwickeln wird,
wobei die dritte Gruppe von Peaks folgenden Wellenzahlen entspricht: 3060 cm⁻¹, 3062 cm⁻¹, 3396 cm⁻¹, 3384 cm⁻¹ und 3052 cm⁻¹,
- andernfalls ist es wahrscheinlich, dass die Person ein myelodysplastisches Syndrom mit hohem Risiko entwickeln wird.

4. Verfahren nach Anspruch 2, wobei, wenn es wahrscheinlich ist, dass die Person eine Leukämie entwickelt, geschlossen wird, dass:
- wenn die Intensitäten einer vierten Gruppe von Peaks in der Spektralsignatur der betreffenden Person signifikant von den Intensitäten derselben Peaks in den Referenzspektralsignaturen abweichen, die Person wahrscheinlich eine sekundäre Leukämie entwickeln wird,
wobei die vierte Gruppe von Peaks folgenden Wellenzahlen entspricht: 3270 cm⁻¹, 3268 cm⁻¹, 3266 cm⁻¹, 3264 cm⁻¹, 3192 cm⁻¹, 3190 cm⁻¹, 2850 cm⁻¹, 2840 cm⁻¹, 1707 cm⁻¹, 1705 cm⁻¹, 1664 cm⁻¹, 1662 cm⁻¹, 1633 cm⁻¹, 1631 cm⁻¹, 1493 cm⁻¹, 1491 cm⁻¹, 1489 cm⁻¹, 1458 cm⁻¹, 1456 cm⁻¹ und 1256 cm⁻¹,
- andernfalls ist es wahrscheinlich, dass die Person eine de-novo-Leukämie entwickeln wird.

5. Verfahren nach einem der Ansprüche 1 bis 4, wobei die biologische Probe eine Blutplasmaprobe ist.

6. Verfahren nach einem der Ansprüche 1 bis 5, wobei das Spektrum und das Referenzspektrum durch die zweite Ableitung der Daten der Infrarotspektroskopie erhalten werden.

7. Verwendung des Verfahrens Anspruch 1 zur in-vitro-Bestimmung des Risikos einer Person, eine maligne Hämopathie zu entwickeln, aus einer Blutprobe, einem Blutnebenprodukt oder einer Knochenmarkprobe derselben Person, wobei
* wenn die Intensitäten von Peaks, die einer ersten Gruppe von Wellenzahlen einer durch Infrarotspektroskopie erhaltenen Spektralsignatur entsprechen, signifikant von den Intensitäten derselben Peaks in der Spektralsignatur von einer oder mehreren Kontrollpersonen abweichen, die Person wahrscheinlich eine maligne Hämopathie entwickeln wird,
wobei die erste Gruppe von Wellenzahlen folgende Werte umfasst: 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹ und 2852 cm⁻¹,
* andernfalls ist es unwahrscheinlich, dass die Person eine maligne Hämopathie entwickelt.

8. Verwendung nach Anspruch 7, wobei, wenn es wahrscheinlich ist, dass die Person eine maligne Hämopathie entwickelt, und
- wenn die Intensitäten von Peaks, die einer zweiten Gruppe von Wellenzahlen einer durch Infrarotspektroskopie erhaltenen Spektralsignatur entsprechen, signifikant von den Intensitäten derselben Peaks in der Spektralsignatur von einer oder mehreren Kontrollpersonen abweichen, die Person wahrscheinlich eine Leukämie entwickeln wird,
wobei die zweite Gruppe von Wellenzahlen folgende Werte umfasst: 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ und 1338 cm⁻¹,
- andernfalls ist es wahrscheinlich, dass die Person ein myelodysplastisches Syndrom entwickeln wird.

9. Verwendung nach Anspruch 8, wobei
- wenn es wahrscheinlich ist, dass die Person ein myelodysplastisches Syndrom entwickelt,
* wenn die Intensitäten von Peaks, die einer dritten Gruppe von Wellenzahlen einer durch Infrarotspektroskopie erhaltenen Spektralsignatur entsprechen, signifikant von den Intensitäten derselben Peaks in der Spektralsignatur von einer oder mehreren Kontrollpersonen abweichen, die Person wahrscheinlich ein myelodysplastisches Syndrom mit niedrigem Risiko entwickeln wird,
wobei die dritte Gruppe von Wellenzahlen folgende Werte umfasst: 3060 cm⁻¹, 3062 cm⁻¹, 3396 cm⁻¹, 3384 cm⁻¹ und 3052 cm⁻¹,
- * andernfalls ist es wahrscheinlich, dass die Person ein myelodysplastisches Syndrom mit hohem Risiko entwickeln wird, und
- wenn es wahrscheinlich ist, dass die Person eine Leukämie entwickelt,
* wenn die Intensitäten von Peaks, die einer vierten Gruppe von Wellenzahlen einer durch Infrarotspektroskopie erhaltenen Spektralsignatur entsprechen, signifikant von den Intensitäten derselben Peaks in der Spektralsignatur von einer oder mehreren Kontrollpersonen abweichen, die Person wahrscheinlich eine sekundäre Leukämie entwickeln wird,
wobei die vierte Gruppe von Wellenzahlen folgende Werte umfasst: 3270 cm⁻¹, 3268 cm⁻¹, 3266 cm⁻¹, 3264 cm⁻¹, 3192 cm⁻¹, 3190 cm⁻¹, 2850 cm⁻¹, 2840 cm⁻¹, 1707 cm⁻¹, 1705 cm⁻¹, 1664 cm⁻¹, 1662 cm⁻¹, 1633 cm⁻¹, 1631 cm⁻¹, 1493 cm⁻¹, 1491 cm⁻¹, 1489 cm⁻¹, 1458 cm⁻¹, 1456 cm⁻¹ und 1256 cm⁻¹,
* andernfalls ist es wahrscheinlich, dass die Person eine de-novo-Leukämie entwickeln wird.

10. Computerprogrammprodukt, das Programmcodeanweisungen umfasst, um die Schritte b), c) und d) des Verfahrens Anspruch 1 oder einem der Ansprüche 2 bis 6 auszuführen, wenn das Programm auf einem Computer ausgeführt wird.

## Claims

1. Method for determining, *in vitro,* the risk for an individual of developing a malignant hemopathy from a biological sample of blood, or of a blood by-product, or of bone marrow from said individual, said method comprising the following steps:
a) exposing the biological sample to medium infrared radiation (MIR) of wavelength ranging from 4000 cm⁻¹ to 400 cm⁻¹ to obtain a spectrum characteristic of said sample;
b) Fourier transform processing of the characteristic infrared spectrum of the biological sample in order to obtain a spectral signature consisting of absorbance peaks characteristic of the nature and relative concentrations of the various molecules present in said sample, by virtue of their position, or of wave number, and of their intensity, or of absorbance;
c) comparing said spectral signature obtained in the previous step with one or more reference spectral signatures, said one or more reference spectral signatures being obtained from biological samples of the same nature as the analyzed biological sample from a population of reference individuals subjected to the same infrared processing (and Fourier transform) as the analyzed biological sample; and
d) concluding that
* if the intensities of a first group of peaks in the spectral signature of said individual are significantly different from the intensities of the same peaks obtained in the reference spectral signature(s), then the individual is likely to develop a hemopathy,
the first group of peaks corresponding to wave numbers from the following first group: 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹, and 2852 cm⁻¹,
* otherwise the individual is not likely to develop a hemopathy.

2. Method according to claim 1, wherein, when the individual is likely to develop a malignant hemopathy, it is further concluded that:
* if the intensities of a second group of peaks of the spectral signature of said individual are significantly different from the intensities of these same peaks obtained in the reference spectral signature(s), then the individual is likely to develop leukemia,
the second group of peaks corresponding to the following wave numbers of the first group: 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ and 1338 cm⁻¹,
* otherwise the individual is likely to develop a myelodysplastic syndrome.

3. Method according to claim 2, wherein when the individual is likely to develop a myelodysplastic syndrome, it is concluded that:
* if the intensities of a third group of peaks of the spectral signature of said individual are significantly different from the intensities of these same peaks obtained in the reference spectral signature(s), the individual is likely to develop a low-risk myelodysplastic syndrome,
the third group of peaks corresponding to wave numbers from the following first group: 3060 cm⁻¹, 3062 cm⁻¹, 3396 cm⁻¹, 3384 cm⁻¹and 3052 cm⁻¹,
* otherwise the individual is likely to develop a high-risk myelodysplastic syndrome.

4. Method according to claim 2, wherein, when the individual is likely to develop leukemia, it is concluded that:
* if the intensities of a fourth group of peaks in the spectral signature of said individual are significantly different from the intensities of these same peaks obtained in the reference spectral signature(s), the individual is likely to develop secondary leukemia,
the fourth group of peaks corresponding to wave numbers from the following first group: 3270 cm⁻¹, 3268 cm⁻¹, 3266 cm⁻¹, 3264 cm⁻¹, 3192 cm⁻¹, 3190 cm⁻¹, 2850 cm⁻¹, 2840 cm⁻¹, 1707 cm⁻¹, 1705 cm⁻¹, 1664 cm⁻¹, 1662 cm⁻¹, 1633 cm⁻¹, 1631 cm⁻¹, 1493 cm⁻¹, 1491 cm⁻¹, 1489 cm⁻¹, 1458 cm⁻¹, 1456 cm⁻¹ and 1256 cm⁻¹,
* otherwise the individual is likely to develop *de novo* leukemia.

5. Method according to any one of claims 1 to 4, wherein said biological sample is a blood plasma sample.

6. Method according to any one of claims 1 to 5, wherein the spectrum and the control spectrum are obtained by the second derivative of the infrared spectroscopy data.

7. Use of the method according to claim 1 for the determination, *in vitro,* of the risk for an individual of developing a malignant hemopathy from a sample of blood, or of a blood by-product, or of bone marrow of said individual, wherein
* if the intensities of peaks corresponding to a first group of wave numbers of a spectral signature obtained, for said sample, by infrared spectroscopy are significantly different from the intensities of the same peaks obtained from the spectral signature of one or more control individuals, then the individual is likely to develop a malignant hemopathy,
said first group of wave numbers corresponding to the following wave numbers: 1330 cm⁻¹, 1445 cm⁻¹, 1478 cm⁻¹, 1493 cm⁻¹, 1505 cm⁻¹, 1507 cm⁻¹, 1520 cm⁻¹, 1526 cm⁻¹, 1544 cm⁻¹, 1571 cm⁻¹, 1602 cm⁻¹, 1668 cm⁻¹, 1674 cm⁻¹, 1676 cm⁻¹, 1697 cm⁻¹, and 2852 cm⁻¹,
* otherwise the individual is not likely to develop a malignant hemopathy.

8. Use according to claim 7, wherein if the individual is likely to develop a malignant hemopathy, and
* if the intensities of peaks corresponding to a second group of wave numbers of a spectral signature obtained, for said sample, by infrared spectroscopy are significantly different from the intensities of the same peaks obtained from the spectral signature of one or more control individuals, then the individual is likely to develop leukemia,
said second group of wave numbers corresponding to the following wave numbers 3316 cm⁻¹, 3283 cm⁻¹, 3281 cm⁻¹, 3256 cm⁻¹, 3118 cm⁻¹, 3116 cm⁻¹, 1345 cm⁻¹, 1343 cm⁻¹, 1340 cm⁻¹ and 1338 cm⁻¹,
* otherwise the individual is likely to develop a myelodysplastic syndrome.

9. Use according to claim 8, wherein
- if the individual is likely to develop a myelodysplastic syndrome,
* if the intensities of peaks corresponding to a third group of wave numbers of a spectral signature obtained, for said sample, by infrared spectroscopy are significantly different from the intensities of the same peaks obtained from the spectral signature of one or more control individuals, the individual is likely to develop a low-risk myelodysplastic syndrome,
said third group of wave numbers corresponding to the following wave numbers: 3060 cm⁻¹, 3062 cm⁻¹, 3396 cm⁻¹, 3384 cm⁻¹and 3052 cm⁻¹,
* otherwise the individual is likely to develop a high-risk myelodysplastic syndrome, and
- if the individual is likely to develop leukemia,
* if the intensities of peaks corresponding to a fourth wave numbers group of a spectral signature obtained, for said sample, by infrared spectroscopy are significantly different from the intensities of the same peaks obtained from the spectral signature of one or more control individuals, the individual is likely to develop secondary leukemia,
said fourth group of wave numbers corresponding to the following wave numbers: 3270 cm⁻¹, 3268 cm⁻¹, 3266 cm⁻¹, 3264 cm⁻¹, 3192 cm⁻¹, 3190 cm⁻¹, 2850 cm⁻¹, 2840 cm⁻¹, 1707 cm⁻¹, 1705 cm⁻¹, 1664 cm⁻¹, 1662 cm⁻¹, 1633 cm⁻¹, 1631 cm⁻¹, 1493 cm⁻¹, 1491 cm⁻¹, 1489 cm⁻¹, 1458 cm⁻¹, 1456 cm⁻¹ and 1256 cm⁻¹,
* otherwise the individual is likely to develop *de novo* leukemia.

10. A computer program product comprising program code instructions for performing steps b), c) and d) of the method according to claim 1 or according to any of claims 2 to 6 when said program is run on a computer.
